# EUROPEAN PATENT APPLICATION

(11) **EP 4 517 790 A1**
(43) Date of publication of application: **05.03.2025**
(21) Application number: 22964996.7
(22) Date of filing: 27.12.2022
(51) Int. Cl.: H01F 27/06, F16F 15/04

(54) **TRACTION TRANSFORMER**

(30) Priority: 08.11.2022 CN 202211391740
(71) Applicant: CRRC Zhuzhou Electric Co., Ltd., Zhuzhou, hunan 412000 (CN)
(72) Inventor: TAN, Wenjun, Zhuzhou, Hunan 412000 (CN); LIANG, Xiangxiang, Zhuzhou, Hunan 412000 (CN); LIU, Ting, Zhuzhou, Hunan 412000 (CN); WU, Wei, Zhuzhou, Hunan 412000 (CN); YANG, Qingquan, Zhuzhou, Hunan 412000 (CN); ZENG, Meiyang, Zhuzhou, Hunan 412000 (CN)
(74) Representative: Laufhütte, Dieter
(86) International application number: PCT/CN2022/142443
(87) International publication number: WO 2024/098532

(57) **Abstract**

A traction transformer, comprising a transformer body and a plurality of mounting bases (1) arranged on the transformer body. All the mounting bases (1) are distributed around the transformer body; any mounting base (1) has a first mounting surface which faces downwards and is used for fitting a locomotive body beam; and any mounting base (1) is provided with an elastic element attached to the first mounting surface and a fastener for passing through and locking the locomotive body beam. The traction transformer is installed on the locomotive body beam by suspension by means of the mounting bases (1) and is elastically connected to the locomotive body beam; and in a running process, vibration impact forces brought to the locomotive body by the traction transformer can be well buffered, thereby improving the impact resistance and comfort of the locomotive body.

## Description

The present application claims the priority of the Chinese Patent Application No. 202211391740.3, titled "TRACTION TRANSFORMER", filed on November 8, 2022 with the China National Intellectual Property Administration, which is incorporated herein by reference in its entirety.

### FIELD

The present application relates to the technical field of electric power, and in particular to a traction transformer.

### BACKGROUND

The traction transformers of the existing locomotives are mostly mounted on a locomotive body in a rigid suspension connection way. For example, both a locomotive body beam and a mounting base of the traction transformer are provided with bolt holes, and the traction transformer and the locomotive body beam are locked and fixed by bolts passing through the bolt holes thereof Then, the traction transformer is suspended from the locomotive body beam under the action of the bolts.

Suspension equipment such as the traction transformer is heavy and often has complex self-vibration sources. The vibration energy generated during operation is not easy to dissipate, which may bring certain mechanical impact on the locomotive body, aggravate the vibration of the locomotive body, and reduce the fatigue resistance of the locomotive body beam and the comfort of the locomotive.

### SUMMARY

An object of the present application is to provide a traction transformer, which can improve the installation characteristics of the traction transformer and enhance the working performance and service life of the product including the traction transformer.

In order to achieve the above object, there is provided a traction transformer, including a transformer body and multiple mounting bases arranged on the transformer body. All of the mounting bases are distributed discretely at the periphery of the transformer body. Any one of the mounting bases has a first mounting surface, which faces downwards and is configured to abut against a locomotive body beam. Any one of the mounting bases has an elastic element abutting against the first mounting surface, and a fastener configured to pass through and lock the locomotive body beam.

In some embodiments, any one of the first mounting surfaces is provided with a positioning groove, into which part of the elastic element is embedded.

In some embodiments, any one of the mounting bases has a second mounting surface which faces upwards. The elastic element is provided on each of the first mounting surface and the second mounting surface, and the fastener passes through the first mounting surface, the second mounting surface and the two elastic elements.

In some embodiments, the transformer body includes an oil tank. The mounting base includes a first mounting portion abutting against and fixed to a surface of the oil tank, and a second mounting portion protruding outwards from the oil tank. Any one of the mounting bases includes one first mounting portion and at least two second mounting portions. A lower surface of any one of the second mounting portions is the first mounting surface.

In some embodiments, all of the second mounting portions have a same height.

In some embodiments, a U-shaped plate is arranged between the first mounting portion and any one of the second mounting portions.

In some embodiments, the U-shaped plate is provided with a positioning hole, and the positioning hole is in line with a mounting path of the fastener.

In some embodiments, a surface of the transformer body is provided with a reinforcing rib connected with the mounting base.

In some embodiments, the reinforcing rib includes an upper reinforcing rib located above the mounting base, and a lower reinforcing rib located below the mounting base. A height of any one of the upper reinforcing rib and the lower reinforcing rib protruding from the transformer body gradually increases towards the mounting base.

Compared with the background technology described above, the traction transformer provided by the present application includes a transformer body and multiple mounting bases arranged on the transformer body. All of the mounting bases are distributed discretely at the periphery of the transformer body, and any one of the mounting bases has a first mounting surface, which faces downwards and is used to abut against the locomotive body beam, and any one of the mounting bases is provided with an elastic element abutting against the first mounting surface, and a fastener for passing through and locking the locomotive body beam.

The traction transformer provided by the present application is supported upwards by the locomotive body via the mounting base and the first mounting surface thereof. Meanwhile, the elastic element is arranged between the locomotive body beam of the locomotive body and the first mounting surface of the mounting base, so that the traction transformer is elastically mounted on the locomotive body. As can be seen, compared with the conventional traction transformer, the traction transformer provided by the present application is partially improved in structure, such that the traction transformer is mounted on the locomotive body beam in a suspended way and elastically connected with the locomotive body beam, so as to absorb the mechanical impact caused by the vibration when the locomotive body is running, weaken the impact on the locomotive body beam, improve the impact resistance and fatigue resistance of the locomotive body, and improve the comfort of the vehicle.

### BRIEF DESCRIPTION OF THE DRAWINGS

In order to describe the technical solutions in the embodiments of the present application or in the conventional technology more clearly, the drawings for describing the embodiments or the conventional technology are briefly introduced hereinafter. Apparently, the drawings in the following description show merely the embodiments of the present application, and those skilled in the art can obtain other drawings based on these drawings without creative efforts.
FIG. 1 is a schematic structural view of a traction transformer provided according to an embodiment of the present application;
FIG. 2 is a top view of FIG. 1; and
FIG. 3 is a right view of FIG. 1.

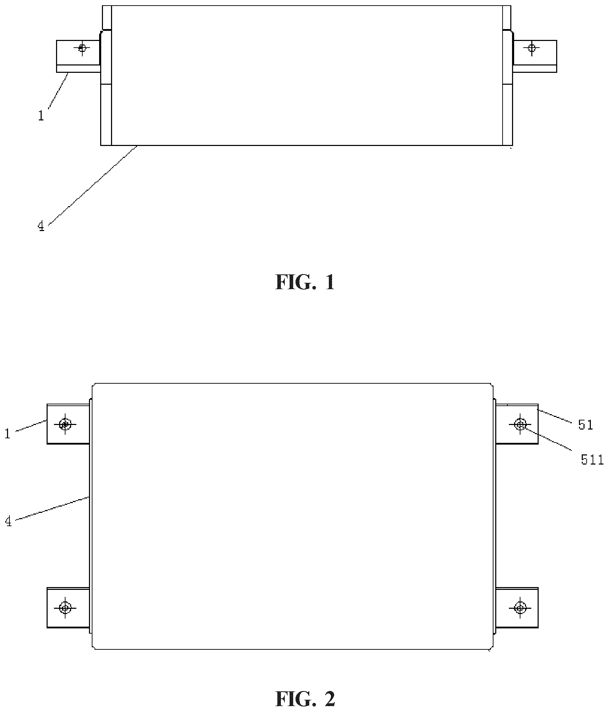

The reference numerals in FIG. 1 to FIG. 3:

| | | | | | |
|---|---|---|---|---|---|
| 1 | mounting base; | 11 | L-shaped plate; | 12 | mounting plate; |
| 4 | oil tank; | 51 | U-shaped plate; | 511 | positioning hole; |
| 53 | reinforcement rib; | 531 | upper reinforcement rib; | 532 | lower reinforcement rib. |

### DETAILED DESCRIPTION OF THE EMBODIMENTS

The solutions in the embodiments of the present application will be described clearly and completely hereinafter in conjunction with the accompanying drawings in the embodiments of the present application. It is apparent that the described embodiments are only a part of the embodiments of the present application and not all of the embodiments. Based on the embodiments of the present application, all other embodiments obtained by those skilled in the art without any creative work fall into the protection scope of the present application.

For better understanding of those skilled in the art, hereinafter technical solutions in embodiments of the present application are described clearly and completely in conjunction with the drawings in embodiments of the present application.

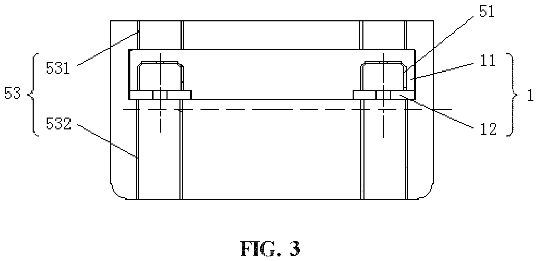

Referring to FIGS. 1 to 3, FIG. 1 is a schematic structural view of a traction transformer provided according to an embodiment of the present application; FIG. 2 is a top view of FIG. 1; and FIG. 3 is a right view of FIG. 1.

With reference to FIGS. 1 to 3, there is provided a traction transformer, which includes a transformer body and multiple mounting bases 1 arranged on the transformer body. In this embodiment, all of the mounting bases 1 are distributed discretely at the periphery of the transformer body. For example, all of the mounting bases 1 are arranged around the sides of the transformer body. Any of the mounting bases 1 has a first mounting surface which faces downwards. Furthermore, any of the mounting bases 1 is provided with an elastic element which abuts against the first mounting surface of the mounting base 1, and a fastener which passes through the elastic element and the first mounting surface.

When assembling the traction transformer and the locomotive body, the mounting bases 1 of the traction transformer are connected to the locomotive body beam of the locomotive body. Specifically, the first mounting surfaces of the mounting bases 1 is placed and positioned on the locomotive body beam of the locomotive body. Since the elastic element abuts against the first mounting surface, the elastic element is located between the first mounting surface and the locomotive body beam when the first mounting surface is placed on the locomotive body beam. The first mounting surface and the locomotive body beam are locked and positioned by the fastener, that is, the fastener passes through and locks the first mounting surface, the elastic element and the locomotive body beam.

Compared with the conventional traction transformer, the partial structure of the traction transformer provided by the present application is reformed, so that the mounting mode of the traction transformer and the locomotive body is changed such as to support the mounting base 1 of the traction transformer upwards on the locomotive body beam of the locomotive body. Meanwhile, the elastic element is arranged between the contact surfaces of the locomotive body beam and the mounting base 1, achieving the elastic mounting of the traction transformer relative to the locomotive body. Therefore, the vibration impact force brought by the traction transformer to the locomotive body can be better buffered during driving, and the fatigue resistance and comfort of the locomotive body can be improved.

Hereinafter, the traction transformer provided by the present application will be further explained with reference to the accompanying drawings in conjunction with embodiments.

In some embodiments, the first mounting surface of the mounting base 1 is provided with a positioning groove, and part of the structure of the elastic element may be embedded in the positioning groove, so that the relative positional relationship between the elastic element and the mounting base 1 is constrained by the positioning groove, and the mounting position of the elastic element between the first mounting surface and the locomotive body beam is guaranteed. In brief, the elastic element is prevented from shifting.

In addition to the first mounting surface, the mounting base 1 is generally provided with a second mounting surface which faces upwards. As shown in FIG. 3, for example, the mounting base 1 includes a mounting plate 12 protruding from the transformer body, and two opposite plate surfaces of the mounting plate 12 are the first mounting surface and the second mounting surface respectively. For the mounting base 1 with the first mounting surface and second mounting surface, one mounting base 1 may be connected with two elastic elements, that is, each of the first mounting surface and second mounting surface of one mounting base 1 is provided with the elastic element. Accordingly, when the mounting base 1 and the locomotive body beam are locked by the fastener, the fastener passes through the first mounting surface, the second mounting surface and the two elastic elements and is locked to the locomotive body beam. In order to better constrain the mounting position of the elastic element, the second mounting surface may also be provided with the positioning groove.

In some embodiments, as shown in FIGS. 1 to 3, the transformer body of the traction transformer may include an oil tank 4, and the multiple mounting bases 1 are arranged on a surface of the oil tank 4. The aforementioned mounting base 1 includes a first mounting portion abutting against and fixed to the surface of the oil tank 4 and a second mounting portion protruding from the oil tank 4. For example, the first mounting portion refers to an L-shaped plate 11 shown in FIG. 3, and the second mounting portion refers to the mounting plate 12 shown in FIG. 3. The cross section of the mounting base 1 assembled by the L-shaped plate 11 and the mounting plate 12 is L-shaped. In this embodiment, any of the mounting bases 1 may include a first mounting portion and at least two second mounting portions, and a lower surface of the second mounting portion is the first mounting surface of the mounting base 1. In other words, when assembling the mounting base 1 and the locomotive body beam, the second mounting portion is placed on the locomotive body beam.

The first mounting portion of the mounting base 1 abuts against and is fixed to the surface of the oil tank 4, so as to increase the strength of the fixed connection between the mounting base 1 and the oil tank 4. One first mounting portion may be connected with two or more second mounting portions, and the multiple second mounting portions may respectively form connection points between the oil tank 4 and the locomotive body beam, improving the stability of mounting the oil tank 4 on the locomotive body beam. And, all of the second mounting portions connected with the same first mounting portion are fixed relative to each other and have a definite relative positional relationship, which can simplify the product structure and improve the mounting accuracy and reliability of the oil tank 4.

Two opposite sides of the oil tank 4 may be respectively provided with the mounting bases 1. These two mounting bases 1 have four second mounting portions formed around the oil tank 4, and four first mounting surfaces of these four second mounting portions face downward and are used to closely abut against the locomotive body beam, so that the oil tank 4 may be mounted in a suspended way by the locomotive body beam. Generally, all of the second mounting portions of one oil tank 4 have the same height.

The first mounting portion and the second mounting portions of the mounting base 1 may be integrally formed or may be assembled and fixed.

With reference to FIG. 3, in some embodiments, the traction transformer provided by the present application further includes a U-shaped plate 51 arranged between the first mounting portion and any of the second mounting portions. The U-shaped plate 51 is connected to both the first mounting portion and the second mounting portions of the same mounting base 1 to improve the structural strength of the mounting base 1.

The U-shaped plate 51 is provided with a positioning hole 511, which is collinear with the mounting track of the fastener. In other words, the mounting base 1 is provided with a fastener mounting hole for receiving a fastener, and the positioning hole 511 is located right above the fastener mounting hole. With reference to FIG. 3, the U-shaped plate 51 is arranged upside down in FIG. 3. Thus, the U-shaped plate 51 includes a top plate and two side surfaces, and the positioning hole 511 can be arranged in the top plate of the U-shaped plate 51. The positioning hole 511 may position the fastener during the assembling of the traction transformer and the locomotive body, thus improving the mounting efficiency and accuracy.

In addition to the U-shaped plate 51, the traction transformer further includes a reinforcing rib 53 arranged on the surface of the transformer body. The reinforcing rib 53 is connected with the transformer body and the mounting base 1, and is used to reinforce and support the mounting base 1.

The reinforcing rib 53 may include an upper reinforcing rib 531 located above the mounting base 1 and a lower reinforcing rib 532 located below the mounting base 1. The height of any of the upper reinforcing rib 531 and the lower reinforcing rib 532 protruding from the transformer body gradually increases toward the mounting base 1. In other words, the closer to the mounting base 1, the larger the height of the upper reinforcing rib 531 and the lower reinforcing rib 532 protruding from the transformer body, and vice versa. Taking the upper reinforcing rib 531 as an example, the upper reinforcing rib 531 may include two parallel wing plates that protrude outward from the surface of the oil tank 4 to form a U-shaped groove structure.

As can be seen, the traction transformer provided by the present application may be mounted on the locomotive body beam in a suspended way and elastically connected to the locomotive body beam, so as to absorb the mechanical impact caused by the vibration when the locomotive body is running, weaken the impact on the locomotive body beam, improve the impact resistance and fatigue resistance of the locomotive body, and improve the comfort of the vehicle.

The traction transformer provided by the present application is described in detail above. Principles and embodiments of the present application are described herein through specific examples. Description of the above embodiments is merely used to facilitate understanding the method and concept of the present application. It should be noted that several improvements and modifications can be made to the present application by those skilled in the art without departing from the principles of the present disclosure. These improvements and modifications shall fall within the scope of the claims of the present application.

## Claims

1. A traction transformer, comprising a transformer body and a plurality of mounting bases (1) arranged on the transformer body, wherein
all of the mounting bases (1) are distributed discretely at the periphery of the transformer body, any one of the mounting bases (1) has a first mounting surface facing downwards and configured to abut against a locomotive body beam, and any one of the mounting bases (1) has an elastic element abutting against the first mounting surface, and a fastener configured to pass through and lock the locomotive body beam.

2. The traction transformer according to claim 1, wherein any one of the first mounting surfaces is provided with a positioning groove, into which part of the elastic element is inserted.

3. The traction transformer according to claim 1, wherein any one of the mounting bases (1) has a second mounting surface which faces upwards, the elastic element is provided on each of the first mounting surface and the second mounting surface, and the fastener passes through the first mounting surface, the second mounting surface and the two elastic elements.

4. The traction transformer according to any one of claims 1 to 3, wherein the transformer body comprises an oil tank (4), the mounting base (1) comprises a first mounting portion abutting against and fixed to a surface of the oil tank (4), and a second mounting portion protruding outwards from the oil tank (4), any one of the mounting bases (1) comprises one first mounting portion and at least two second mounting portions, and a lower surface of any one of the second mounting portions is the first mounting surface.

5. The traction transformer according to claim 4, wherein all of the second mounting portions have a same height.

6. The traction transformer according to claim 5, wherein a U-shaped plate (51) is arranged between the first mounting portion and any one of the second mounting portions.

7. The traction transformer according to claim 6, wherein the U-shaped plate (51) is provided with a positioning hole (511), and the positioning hole (511) is in line with a mounting path of the fastener.

8. The traction transformer according to claim 4, wherein a surface of the transformer body is provided with a reinforcing rib (53) connected with the mounting base (1).

9. The traction transformer according to claim 8, wherein the reinforcing rib (53) comprises an upper reinforcing rib (531) located above the mounting base (1), and a lower reinforcing rib (532) located below the mounting base (1), and a height of any one of the upper reinforcing rib (531) and the lower reinforcing rib (532) protruding from the transformer body gradually increases towards the mounting base (1).
